**Europäisches Patentamt**

**European Patent Office**

**Office européen des brevets**

(19)

(11) Veröffentlichungsnummer: **0 029 152**
**A1**

(12) # EUROPÄISCHE PATENTANMELDUNG

(21) Anmeldenummer: **80106735.6**

(22) Anmeldetag: **03.11.80**

(51) Int. Cl.³: **E 06 B 3/38**, E 06 B 3/66,
B 60 J 1/00, B 29 C 17/03,
B 29 C 17/07

(30) Priorität: **15.11.79 DE 2946146**
**19.12.79 DE 2951262**
**23.01.80 DE 8001614 U**

(71) Anmelder: **Johann König & Sohn, Grünewaldstrasse 27,
D-8702 Estenfeld (DE)**

(43) Veröffentlichungstag der Anmeldung: **27.05.81**
**Patentblatt 81/21**

(72) Erfinder: **König, Johann, D-6492 Sinntal 4 (DE)**

(84) Benannte Vertragsstaaten: **AT BE CH DE FR GB IT LI LU
NL SE**

(74) Vertreter: **Patentanwälte Czowalla . Matschkur +
Partner, Königstrasse 1, D-8500 Nürnberg (DE)**

(54) **Wohnwagenfenster oder dgl. sowie Verfahren und Vorrichtung zu seiner Herstellung.**

(57) Isolierverglastes, ausstellbares Fenster für Wohnwagen od. dgl. mit einer längs der Oberkante der dichtend miteinander verbundenen Scheiben (2, 3) verlaufenden, als Schwenklager in ein Gegenprofil (6) des aus Isolierstoff bestehenden Fensterrahmens (1) eingehängten Hakenleiste (5) und einer im Bereich der Unterkante angreifenden, die Scheiben (2, 3) an den Rahmen (1) anpressenden Verschlußeinrichtung, wobei die Hakenleiste (5) durch eine einstückige Abwinklung wenigstens einer aus Kunststoff oder Kunstglas bestehenden Scheibe gebildet ist.

0029152

Dr. Max Schneider † (1977)
Dr. Alfred Eitel Dipl.-Ing.
Ernst Czowalla Dipl.-Ing. Dipl.-Ldw.
Patentanwälte Peter Matschkur Dipl.-Phys.

Zugelassen beim Europäischen Patentamt - admitted to the European Patent Office - agréés près l'Office européen des brevets

85 Nürnberg 106, den    30.10.1980
Königstraße 1 (Museumsbrücke)
Fernsprech-Sammel-Nr. 20 39 31

P Parkhaus Katharinenhof
  Parkhaus Adlerstraße
uns.Zch.: 30 638/29-R1.

Johann König & Sohn, Grünewaldstraße 27, 8702 Estenfeld
-----------------------------------------------------------------

"Wohnwagenfenster o.dgl. sowie Verfahren zu
   seiner Herstellung"

BEZEICHNUNG GEÄNDERT.
siehe Titelseite

Die Erfindung bezieht sich auf ein isolierverglastes, ausstellbares Fenster für Wohnwagen o.dgl.,mit einer längs der
Oberkante der dicht miteinander verbundenen Scheiben verlaufenden, als Schwenklager in ein Gegenprofil des aus Isolierstoff bestehenden Fensterrahmens eingehängten Hakenleiste
und einer im Bereich der Unterkante angreifenden, die Scheiben an den Rahmen anpressenden Verschlußeinrichtung sowie
ein Verfahren zur Herstellung derartiger Fenster.

Bei den üblichen isolierverglasten Wohnwagenfenstern ist
eine ebene Scheibe mit der an ihr anliegenden Randzone einer
bombierten Scheibe verbunden,wobei die Verbindung entweder
über ein die beiden Scheibenränder in Abstand haltendes Dichtprofil oder aber bevorzugt durch unmittelbares Aneinanderlegen und Verkleben bzw . Verschweißen oder Scheibenränder erzielt wird. Längs der Oberkante der Scheiben ist üblicherweise ein Aluminiumdichtprofil aufgesteckt und mittels die

Deutsche Bank A. G. Nürnberg Nr. 330 688, BLZ 760 700 12  -  Hypobank Nürnberg Nr. 1 560 274 501, BLZ 760 202 14
Postscheck-Konto: Amt Nürnberg Nr. 383 05-855 - Drahtanschrift: Norispatent

0029152

-2-

Scheiben durchsetzenden Nieten o.dgl. gehaltert. Dieses Aluminiumdichtprofil ist hakenförmig abgewinkelt und greift als Schwenklager in ein Gegenprofil des Fensterrahmens ein, so daß das Fenster um die dadurch gebildete Schwenkachse unten ausgestellt werden kann.

Diese übliche Konstruktion von Wohnwagenfenstern mit einer verformten, nämlich bombierten, und einer unverformten Scheibe, hat wegen des unterschiedlichen Dehnungsverhaltens bei Temperaturwechseln den Nachteil, daß Zug- und Druckspannungen auftreten, die eine Spannungskorrosion verursachen. Hinzu kommt noch, daß die aus anderem Material als die Glasscheiben bestehende, mit ihnen verbundene, insbesondere vernietete, Hakenleiste, ebenfalls ein unterschiedliches Temperatur-Ausdehnungsverhalten zeigt, so daß auch aus diesem Grund zusätzliche Spannungen in die Randzone der Scheiben gebracht werden, die im Betrieb immer wieder zu einem Bruch der Scheiben führen. Diese Gefahr ist umso grösser, als bereits die durch den unterschiedlichen Temperaturgang bewirkten Spannungen wegen der beim Transport von Wohnwagen auftretenden Erschütterungen, eine besondere Bruchgefährdung darstellen, die über die direkte Bruchgefahr aufgrund der thermischen Verspannungen erheblich hinausgeht.

Der Erfindung liegt daher die Aufgabe zugrunde, ein isolierverglastes ausstellbares Fenster für Wohnwagen zu schaffen, welches bei einfachem Aufbau Verspannungen in den Glasscheiben weitestgehend vermeidet und damit die Bruchgefahr gegenüber bekannten Wohnwagenfenstern erheblich reduziert.

Zur Lösung dieser Aufgabe ist bei einem Fenster der eingangs genannten Art gemäß der Erfindung vorgesehen, daß die Hakenleiste durch eine einstückige Abwinklung wenigstens einer aus Kunststoff oder Kunstglas bestehenden Scheibe gebildet ist.

-3-

Mit besonderem Vorteil soll das Fenster zwei bombierte Scheiben umfassen, deren unmittelbar miteinander verbundene obere Randzonen gemeinsam unter Bildung der Hakenleiste abgewinkelt sind.

Durch diese Ersetzung der bisher üblichen gesonderten Hakenleiste durch eine einstückige Abwinklung der Fensteroberkanten, die wiederum durch die Ausbildung des Fensters aus Kunststoff oder Kunstglas ermöglicht wird, da dies weniger spröde ist als normales Glas, entfallen die bisherigen Schwierigkeiten mit unterschiedlichen Ausdehnungen im oberen Scheibenbereich sowie infolge der Durchbohrung der Scheiben und der Nietbefestigung der Dichtleiste vollständig. Durch die Bombierung beider Scheiben entfällt darüberhinaus auch die eingangs beschriebene Schwierigkeit des unterschiedlichen Dehnungsverhaltens, wie es bei Wohnwagenfenstern mit einer ebenen und einer bombierten Scheibe im Randbereich auftritt, wobei es in diesem Zusammenhang nicht unbedingt erforderlich ist, daß die Bombierung beider Scheiben in gleich starkem Maß ausgeführt ist.

Im Zuge der erfindungsgemäßen Fensterausbildung, die das Anbringen verspannungsverursachender Beschläge an den Scheiben vermeiden will, kann in Weiterbildung der Erfindung vorgesehen sein, daß die, vorzugsweise als Kniegelenkhebel ausgebildeten, an sich bekannten Aussteller, die das Fenster in einer um die obere Schwenkkante verschwenkten Schrägstellung nach außen halten, an auf die Seitenränder der Scheiben aufgesteckten, außerhalb der umlaufenden Dichtlippe des Fensterrahmens liegenden Klemmstücken angelenkt sind.

Durch diese Ausbildung, bei der nicht, wie bislang üblich, eine Vernietung an den Scheibenaußenrändern stattfindet, sondern eine ein unterschiedliches Dehnungsverhalten des Klemmstücks und des Scheibenrandes ermöglichende lose Klem-

- 4 -

mung, sind auch im Seitenbereich der Scheiben die vorstehend beschriebenen, die Hauptschwierigkeiten bei derartigen Fenstern verursachenden Spannungen aufgrund von Durchbrechungen der Scheib-en bzw. unterschiedlichen Temperaturgängen der miteinander verbujndenen Teile, quantitativ ausgescnlossen.

Dabei kann, in weiterer Ausgestaltung der Erfindung, vorgesehen sein, daß die Klemmstücke auf durch entsprechende Formgebung der Scheiben gebildete Verrippungen der Scheibenränder aufsteckbar sind, so daß die Gefahr eines einfachen Abrutschens der Klemmstücke vermieden ist, ohne daß diese mit allzu starkem Klemmdruck auf den Rändern aufsitzen müssen.

Eine weitere erhebliche Schwierigkeit bei den bekannten Wohnwagenfesntern besteht in der Ausbildung der Verschlußeinrichtungen, die den unteren Rand des ausstellbaren Fensters an den Fensterrahmen anpressen. Diese Verschlußeinrichtungen sind üblicherweise als zwei beabstandete Knebelverschlüsse ausgebildet, die wegen der Punktwirkung auf den unteren Scheibenrand zu einer Verbiegung dieses Scheibenrandes im Klemmbereich führen, was wiederum erhebliche innere Spannungen in der Glasscheibe bewirkt. Daraus resultiert wiederum eine erhöhte Gefahr eines Scheibenbruchs, insbesondere wenn man die zusätzlichen Belastungen derartiger Wohnwagenfesnter aufgrund der Betriebserschütterungen und der starken Temperaturschwankungen und damit Temperaturspannungen in Rechnung stellt.

Um auch diese Verspannung der Scheiben durch die Verschlußeinrichtung zu beseitigen und damit eine quasi allseitig spannungsfreie, auch bei Temperaturschwankungen spannungsfreie, Ausbildung und Halterung der Galsscheiben des Fensters zu erzielen, ist ein isolierverglastes Fenster in Ausgestaltung der Erfindung gekennzeichnet durch eine sich über

- 5 -

den größten Teil der insbesondere die gesamte Breite des Fensters erstreckende, die untere Scheibenrandzone federnd an den Rahmen anpressende Klemmleiste. Das Vorsehen einer derartigen Klemmleiste bewirkt zunächst, daß die punktuelle Belastung bei gleichbleibender Gesamtanpressung des Fensters am Rahmen, erheblich gegenüber den bisherigen Knebelverschlüssen verringert ist. Eine Ausbuchtung und damit eine zusätzliche Spannungsbelastung ist durch die Erstreckung der Klemmleiste über die gesamte Fensterbreite vollständig vermieden.

Durch eine in weiterer Ausgestaltung der Erfindung vorgesehene Ausbildung, wonach nur ein etwa mittig an der Klemmleiste angreifender Knebelhaken vorgesehen ist, ist gewährleistet, daß die Klemmleiste sich selbsttätig der Ebene der unteren Scheibenrandzone anpaßt, so daß eine besondere Justierung der Scheibenaufhängung zur Klemmleistenlagerung völlig vermieden ist. Selbst bei einem Verziehen der unteren Scheibenrandzone verkippt die Klemmleiste in ihrer Längsrichtung entsprechend dieser Schrägstellung und es entstehen keinerlei unsymmetrische Klemmkräfte an den Enden der unteren Scheibenrandzone.

Mit besonderem Vorteil kann vorgesehen sein, daß die Klemmleiste eine querschnittlich im wesentlichen U-förmige, frei in einer Ausnehmung des Fensterrahmens liegende Profilleiste aus Kunststoff o.dgl. ist, deren einer, vorzugsweise verlängerter Klemmschenkel der unteren Scheibenrandzone anliegt und an deren zweiten Betätigungsschenkel wenigstens ein ihre Verchwenkung bewirkender Knebelhaken angreift, wobei der Knebelhaken bevorzugt an einer von der Anlagefläche des Fensterrahmens weg zum Klemmschenkel gerichteten Abwinklung des Betätigungsschenkels angreifen kann. Die verlängerte Ausbildung des Klemmschenkels ergibt ein weicheres Federverhalten dieses aus elastischem Kunststoff bestehenden Teils,

- 6 -

so daß sich auch Verbiegungen innerhalb der Glasscheiben und die Gefahr einer erhöhten Verspannung, durch entsprechende Anpassung des Klemmschenkels auffangen lassen.

Den miteinander verbundenen, insbesondere verklebten oder verschweißten Scheiben kann eine ebene Klarsichtfolie zwischengeordnet sein, so daß ein Zweikammerfenster entsteht, welches eine erhöhte Wärmeisolierung bei ansonsten gleichen Abmessungen zur Folge hat.

Schließlich liegt es auch noch im Rahmen der Erfindung, die Ebenen der Scheiben, insbesondere der Außenscheibe, gegenüber den entsprechenden Seitenflächen des Fensterrahmens zurückzusetzen. Durch diese Ausbildung, die erst durch das Bombieren beider Scheiben überhaupt ermöglicht wird, da dadurch eine übermäßig starke Bombierung der Scheibe - ein gewisser Mindestabstand der Scheiben ist für eine ausreichende Isolierung notwendig - entfällt, besteht weder innen, noch vor allem auf der Außenseite des Wohnwagens ein Oberstand des Fensters über die Wand, so daß Beschädigungen und übermäßige Verschmutzung des Fensters durch mit dem Fahrtwind vorbeistreichende feste Teilchen und Schmutzpartikel, weitestgehend vermieden werden können.

Die Fensterrahmen für die vorstehend beschriebenen Wohnwagenfenster bestehen heutzutage entweder aus Aluminiumprofilen oder aus Polyurethanschaum. Neben den hohen Kosten von Aluminiumprofilen stellen Aluminiumrahmen störende Kältebrücken dar, bei denen Reif- und Kondenswasserbildung im Innenraum praktisch unvermeidlich sind. Fensterrahmen aus Polyurethanschaum haben jedoch den Nachteil, daß sie nur mit aufwendigen Kompaktformen hergestellt werden können, wobei für jede Fenstergröße eigene derartige Formen vorhanden sein müssen.

-7-

Um im Zuge der vorliegenden Verbesserung, Konstruktion und Fertigung von Wohnwagenfenstern auch die Kunststoff-Fensterrahmen so auszugestalten, daß sie einfach und billig in beliebigen unterschiedlichen Größen hergestellt und darüber hinaus einfach in die entsprechenden Fensterleibungen der Wohnwagen o.dgl. eingebaut werden können, ist in weiterer Ausgestaltung der Erfindung vorgesehen, daß der Kunststoff-Fensterrahmen aus Kunststoffprofilleisten und sie verbindenden vorgeformten Eckverbindungsstücken zusammengesetzt ist.

Durch die erfindungsgemäße Ausbildung können die eigentlichen Seitenteile des Rahmens Ablängteile von extrudierten Kunststoffprofilen sein. Diese extrudierten Kunststoffprofile können durch Beimischung eines Treibmittels aus aufgeschäumtem Material bestehen. Darüber hinaus wäre es selbstverständlich auch möglich, derartige Profilstangen in Kompaktformen zu schäumen und dann jeweils die benötigten Längenabschnitte abzulängen. Es bedarf dann lediglich einiger weniger auf die Profilierung der Fensterrahmenstreben abgestellter Eckteile, um Fensterrahmen beliebiger Größe zu fertigen. Die Verbindung kann dabei als einfache Steckverbindung ausgebildet sein, insbesondere nachdem ja nach dem Einbau in die Wandleibung ein seitliches Auseinanderfallen der Rahmenteile sowieso nicht mehr möglich ist. Darüber hinaus kann selbstverständlich auch zusätzlich eine Verklebung od.dgl. vorgesehen werden.

Zur weiteren Verringerung der Zahl der Einzelteile kann vorgesehen sein, daß die beiden aufrechtstehenden Rahmenstiele mit den unteren Eckverbindungsstücken jeweils eine Einheit bilden. Diese Rahmenstiele werden dann in einer Länge gefertigt, die der größtmöglich vorkommenden Fensterrahmenhöhe entspricht, so daß für in der Höhe niedrigere Fenster diese vertikalen Rahmenstiele entsprechend verkürzt werden.

- 8 -

Zur besonders einfachen Befestigung eines erfindungsgemäßen Fensterrahmens in der Leibung der Wohnwagenwand o.dgl. kann in Weiterbildung der Erfindung vorgesehen sein, daß die obere unduntere Querprofilleiste zur Aufnahme der Wohnwagenwand genutet sind, wobei die Nut der oberen Querprofilleiste doppelt so tief ist wie die Nut der unteren Querprofilleiste.

Durch diese Ausbildung läßt sich der leicht schräg gehaltene Fensterrahmen zunächst soweit nach oben schieben, daß die Seitenwand des Wohnwagens vollständig in die tiefe obere Nut einragt. Dadurch läßt sich das Fenster dann in die vertikale Stellung eindrücken. Nach dem Absenken um die Tiefe der Nut der unteren Querprofilleiste ragt die Seitenwand immer noch um das gleiche Maß in die Nut der oberen Querprofilleiste, so daß eine Verankerung des Fensters gegeben ist, die noch durch zwei innere Abdeckleisten für die Fälze der aufrechtstehenden Rahmenstiele komplettiert werden kann.

Schließlich ist es auch noch möglich, die obere Querprofilleiste mit einer angeformten Hakenleiste zum Einhängen der Fensterscheiben und/oder einer Rollo-Aufnahme zu versehen.

Die Erfindung richtet sich darüber hinaus auf ein Verfahren zur Herstellung erfindungsgemäßer Wohnwagenfenster dergestalt, daß die bisher rein manuelle Fertigung derartiger Fenster aus verformten Kunststoffscheiben vereinfacht und somit automatisierbar gemacht werden.Das Fertigungsverfahren soll dabei insbesondere so ausgelegt sein, daß es universell einsetzbar sowohl die Herstellung herkömmlicher Fenster aus bombierten Scheiben, als auch - vorzugsweise - die Fertigung der erfindungsgemäßen Fenster mit einer angeformten Hakenleiste zur schwenkbaren Aufhängung des Fensters am Fensterrahmen gestattet.

- 9 -

Zur Lösung dieser Aufgabe ist erfindungsgemäß vorgesehen,daß ein beide Scheib-en umfassender einstückiger ebener Zuschnitt, vorzugsweise mittels Wärmestrahlung, im Bereich der Scheibenränder erwärmt und im Wege des Tiefziehens oder Formpressens verformt wird, daß die beiden Hälften um die Mittelachse übereinandergeklappt und daß schließlich die Randbereiche miteinander verklebt oder verschweißt werden.

Dieses erfindungsgemäße Herstellungsverfahren ermöglicht,insbesondere durch das Ausgehen von einem einstückigen, beide Scheiben umfassenden Zuschnitt, eine sehr einfache automatisierbare Fertigung, bei der ein paßgenaues Übereinanderfahren getrennter Scheiben, was erhebliche konstruktive Probleme mit sich bringt, vermieden wird. Darüber hinaus ermöglicht dieses Verfahren, was weiter unten noch im einzelnen näher beschrieben wird, die Verwendung einer besonders einfachen Vorrichtung, bei der die sowieso notwendige Form zum Tiefziehen oder Formpressen der Kunststoffscheiben in ihre bombierte Endform gleich als Vorrichtung zum Übereinanderklappen und Verbinden der beiden Scheiben miteinander herangezogen wird.

In Weiterbildung der Erfindung kann vorgesehen sein, daß mit dem Zusammenklappen des Scheibenzuschnittes eine Klarsichtfolie zwischen den Hälften verklemmt wird, so daß sich ein Zweikammerfenster mit einer mittigen Trennfolie ergibt, was nochmals erhöhte Wärmedämmwerte mit sich bringt.

Bei Anwendung des erfindungsgemäßen Herstellungsverfahrens auf die bereits genannten Kunststoffenster mit einstückig angeformten Hakenleisten zur Schwenkaufhängung im Fensterrahmen sollen vorzugsweise längs der zur Mittelachse, d.h. der Klappachse des Scheibenzuschnitts,parallelen Außenkanten angeordnete Verlängerungsabschnitte der Scheibenränder nach deren Verbindung hakenförmig umgebogen werden.

- 10 -

Zur Durchführung des erfindungsgemäßen Verfahrens ist eine Vorrichtung vorgesehen, die gekennzeichnet ist durch zwei spiegelverkehrt über ein Gelenk miteinander verbundene Form_ hälften, deren Randflächen spaltfrei aufeinanderpassen mit Anschlüssen für eine Saugquelle und/oder eine Druckgasquelle zur Erzeugung eines Unterdrucks unter bzw. eines Überdrucks über den auf den Formhälften aufliegenden Scheibenzuschnitt, eine relativ zur Form verfahrbare Heizvorrichtung, sowie taktgesteuerte Antriebsvorrichtungen zur Bewegung der Form relativ zur Heizvorrichtung, zur Bewegung der Formhälften und zur Betätigung der Saug- und/oder Druckgasquelle. Dabei soll mit besonderem Vorteil in den Formausnehmungen Auswerferplatten verschiebbar gelagert sein, die unter Federwirkung über die Formränder überstehen und die mit Bohrungen versehen sind, die zum Zwecke der Scheibenhalterung mit der Saugquelle verbindbar sind.

Der erfindungsgemäßen Vorrichtung wird der Kunststoffscheibenzuschnitt durch Ansaugen an die Auswerferplatten so gehaltert, daß die zu erwärmenden Randzonen, die beim Tiefziehen oder Formpressen anschließend verformt werden sollen, freiliegen. Dadurch erfolgt an dieser Stelle keine Wärmeableitung durch direktes Aufliegen auf Teilen der Vorrichtung, so daß die Erwärmung besonders problemlos und rasch, beispielsweise über Infrarotstrahler, erfolgen kann.

Als besonders vorteilhaft hat es sich erwiesen, wenn die Scheiben nicht, wie es grundsätzlich möglich ist, durch Tiefziehen in die bombierte Endform gebracht werden, sondern wenn man stattdessen in wenigstens einer der Formhälften, vorzugsweise in deren zur Gelenkachse senkrechten Rändern, Querrinnen einformt, die zur Aufnahme von zwischen die zusammengeklappten Scheiben einragenden, sie mittels Druckgas in die Formausnehmungen drückenden, nach vorne hin sich konisch verjüngenden Druckgasrohrstutzen dienen. Die Bombierung der Scheiben erfolgt somit im wesentlichen erst nach dem Zusammenklappen des Scheibenzuschnitts, wobei der Druckgasstutzen infolge der konischen Verjüngung nach vorne sich anschließend ohne Schwierigkeiten wieder herausziehen läßt. Der im Bereich der erwärmten Außenkanten liegende Kanal kann problemlos verquetscht werden. Das Sichausprägen des Druckgasrohrstutzens als äußere Erhebung der Scheibenränder läßt sich zur Halterung von ohne weitere Befestigungsmittel auf die Scheibenränder aufgesetzten U-Schienen heranziehen, welche zur Lenkung des Ausstellgestänges dienen. Um die Halterung noch weiter zu verbessern, kann vorgesehen sein, daß die Querrinnen der Formhälften mit zur Ausbildung von äußeren Rippen, Noppen o.dgl. dienenden Vertiefungen versehen sind. Diese Rippen, Noppen o.dgl. bilden eine zusätzliche Rutschsicherung für die angesprochenen Beschlagteile.

In weiterer Ausgestaltung der Erfindung kann vorgesehen sein, daß die Auswerferplatten mit einer, vorzugsweise als über die Saugquelle betätigbare Verstellmanschette ausgebildeten, Einzugsvorrichtung versehen sind, um sie mit den daran angesaugten Mittelabschnitten der Scheiben vor dem Zusammenklappen der Formhälften etwas unter die Randebene der Formhälften zurückzuziehen.

Durch diese Ausbildung ist es möglich, die Scheiben vor ihrem Übereinanderklappen geringfügig zu bombieren, so daß die Mittelabschnitte nicht flächig aufeinanderliegen, was bei der bevorzugten Verformung mittels eingeblasener Druckluft sonst zu Schwierigkeiten führen könnte.

Eine ganz besonders einfache Ausgestaltung der schwenkbar aneinander angelenkten und übereinander zu klappenden Formhälften ergibt sich in Weiterbildung der Erfindung dadurch, daß die Formhälften vor einer Grundplatte durch in Abstand von der Schwenkachse angreifende Schwenkhebel, sowie die in Füh-

-12-

rungsschienen senkrecht zur Grundplatte feststellbar verschiebbare Gelenkachse gehaltert sind. Zum Zusammenklappen der zunächst in einer Ebene liegenden Formhälften ist dann lediglich ein linearer Verstellantrieb notwendig,der an der Schwenkachse der Formen angreift, diese längs den Führungsschienen verschiebt. Dies ermöglicht auch wiederum eine beliebige Anordnung der Formhälften, die neben der üblicherweise gewählten waagrechten Anordnung auch senkrecht an einervertikalen Tragwand gehaltert sein könnten.

Zur Bildung der angeformten Hakenleiste kann die eine Formhälfte, vorzugsweise an dem zur Gelenkachse parallelen Rand, mit einer starren Patritze und die andere Formhälfte mit einer verschwenkbaren, eine Rinne aufweisenden Matritze versehen sein, welche, durch eine Antriebsvorrichtung um 90° verschwenkt, Verlängerungsabschnitte der Scheibenränder hakenförmig um die Patritze abwinkelt.

Schließlich liegt es auch noch im Rahmen der Erfindung, seitlich in Verlängerungen der Gelenkachse der Formhälften eine senkrecht zur Grundebene angeordnete Folienrolle und dieser gegenüberstehend eine Klemmleiste zum Festhalten des freien Endes der über den Scheibenzuschnitt gespannten Folie anzuordnen, wobei sowohl die Folienrolle als auch die Klemmleiste mit der Gelenkachse zur gemeinsamen Bewegung verbunden sind.

Beim Absenken der Gelenkachse in den Führungsschienen wird also die Folienrolle und die Klemmleiste entsprechend mit abgesenkt, so daß die über den Scheibenzuschnitt gespannte Folie mit dem Zusammenklappen der Formhälften zwischen den Scheiben unter Bildung eines Zweikammerfensters verklemmt wird.

0029152

-13-

Das Spannen der Folie über den Scheibenzuschnitt kann von
Hand erfolgen, läßt sich jedoch selbstverständlich relativ
einfach automatisieren.

Die erfindungsgemäße außerordentlich einfach aufgebaute
Fertigungsvorrichtung läßt sich in Anpassung an das besondere Fertigungsverfahren noch weiter verbessern, wenn mehrere
Formen nebeneinander angeordnet sind, wobei lediglich eine
Heizstrahlervorrichtung verfahrbar über diesen Formen vorgesehen zu sein braucht. Die Betätigung der Formen erfolgt in
einem versetzten Arbeitstakt, so daß beispielsweise auf
einer Form der Scheibenzuschnitt mittels der darüber verfahrenen Heizvorrichtung erwärmt wird, während eine andere
Form zusammengeklappt und eine dritte Form geöffnet wird,um
die fertige Scheibe zu entnehmen.

Weitere Vorteile, Merkmale und Einzelheiten der Erfindung
ergeben sich aus der nachfolgenden Beschreibung eines Ausführungsbeispiels, wowie an Hand der Zeichnung. Dabei zeigen:

Fig. 1 eine Draufsicht auf ein erfindungsgemäßes Fenster,

Fig. 2 einen abgewinkelten Schnitt längs der Linie II-II

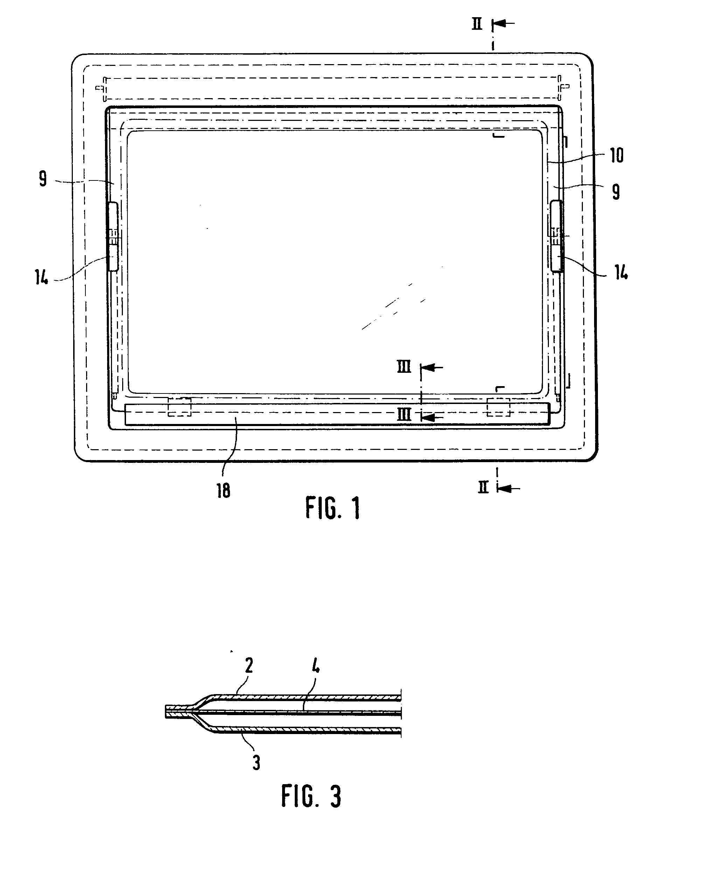

in Fig. 1,

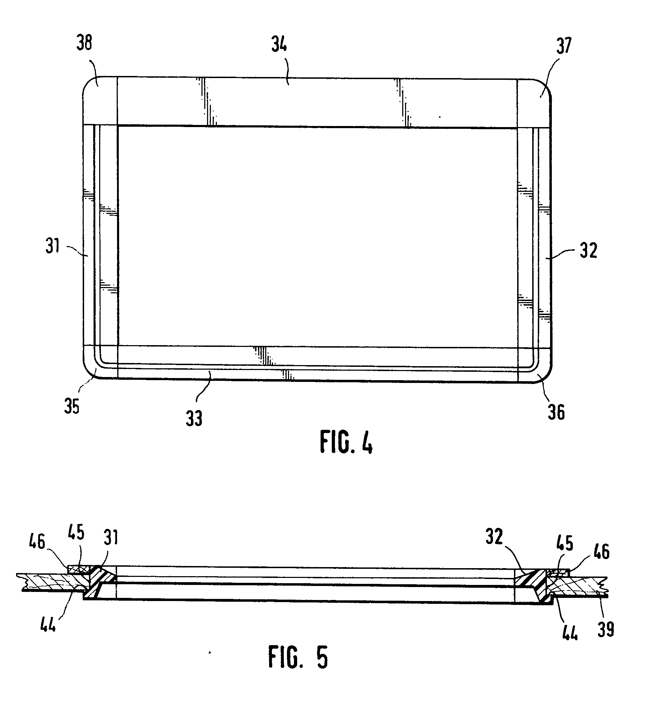

Fig. 3 einen Schnitt durch die miteinander verbundenen Glasscheiben allein, etwa längs der Linie III-III in
Fig. 1,

Fig. 4 eine Ansicht eines erfindungsgemäßen Fensterrahmens
von der Außenseite,

Fig. 5 einen waagrechten Schnitt durch das eingebaute Fenster,

-14-

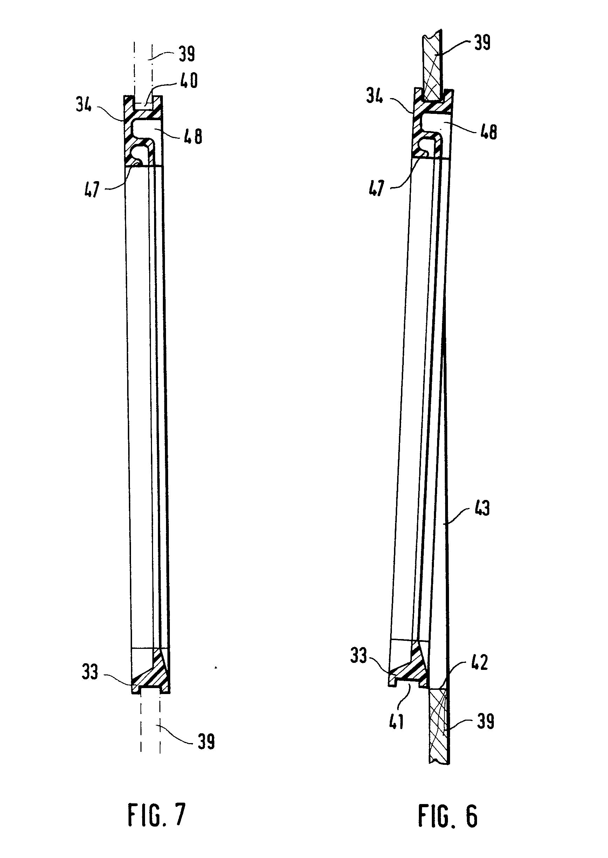

Fig. 6 und 7 einen vertikalen Schnitt durch den Fensterrahmen während und nach dem Einbau,

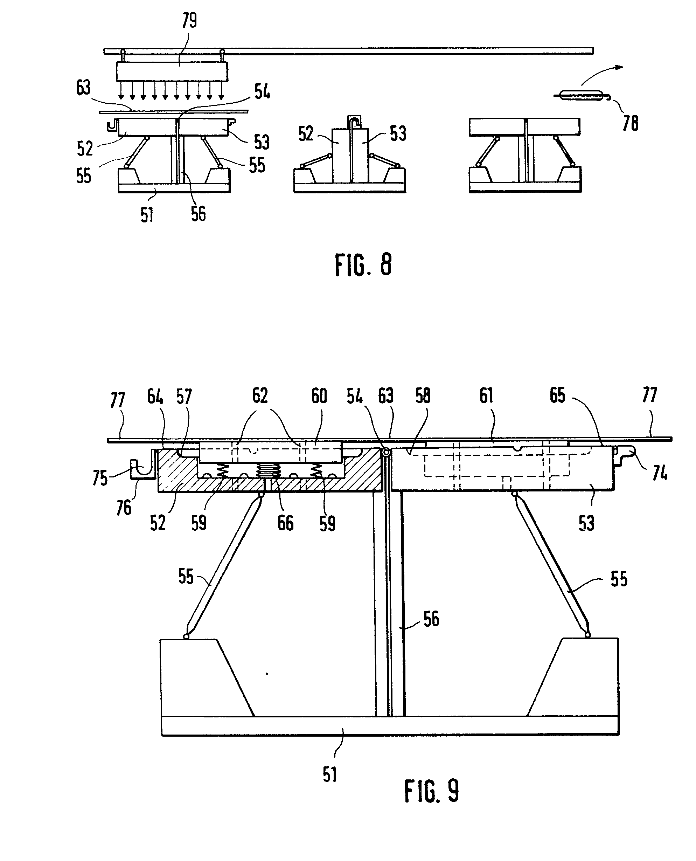

Fig. 8 eine schematische Seitenansicht einer erfindungsgemäßen Vorrichtung zur Herstellung von Fenstern gemäß Fig. 1 bis 7 mit mehreren nebeneinander stehenden Formen und einer über ihnen verfahrbaren Heizvorrichtung unter Weglassung der Teile zum Spannen einer Kunststoffolie,

Fig. 9 eine vergrößerte, teilweise aufgebrochene Seitenansicht einer aufgeklappten Form,

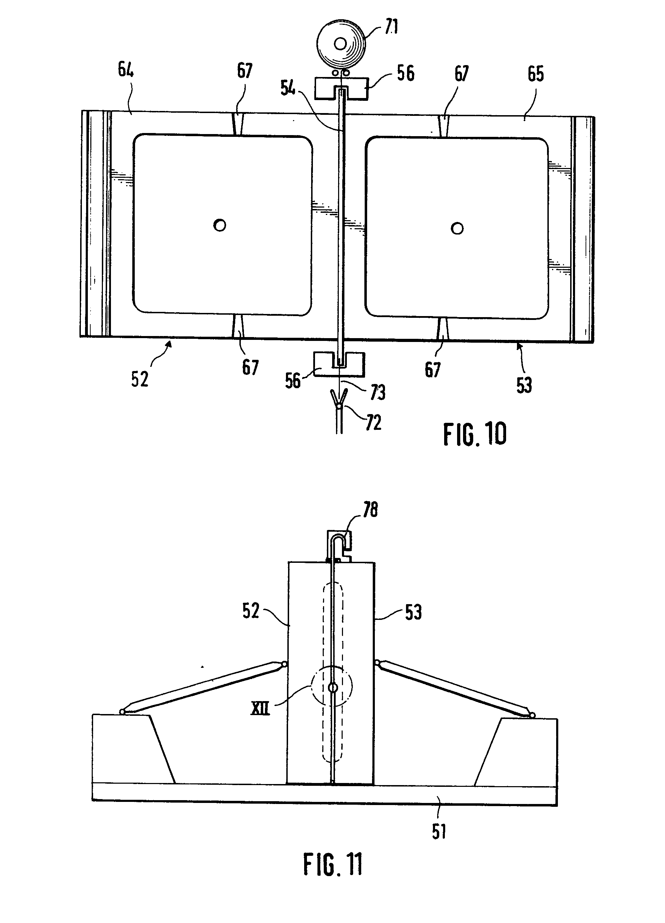

Fig.10 eine Draufsicht auf die Form einschließlich der seitlich angeordneten Folienrolle sowie der ihr zugeordneten Klemmleiste

Fig. 11eine Ansicht X-X in Fig. 10,

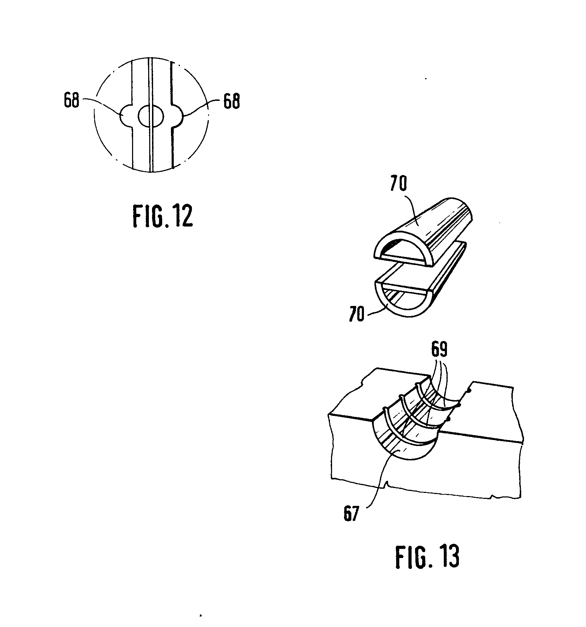

Fig.12 eine vergrößerte Ansicht des Ausschnitts XI in Fig. 11, in welchem die Preßluftrohre zwischen die Scheiben einragen und

Fig.13 eine noch stärker vergrößerte perspektivische Teilansicht des Formrandes mit der Querausnehmung und darüber angeordneten Rohrstutzen.

In einen Rahmen 1 aus isolierendem Werkstoff, insbesondere Kunststoff, der zur Gewichtsverringerung und zur Erhöhung der Isolierwirkung noch zusätzlich aufgeschäumt sein kann, ist das eigentliche Fenster eingehängt, welches aus in Abstand miteinander verbundenen Glasscheiben 2 und 3 besteht. Beide Glasscheiben 2 und 3 sind bombiert und im Bereich ihrer aneinander anliegenden Randzonen unmittelbar - bzw. gemäß Fig. 3 durch Zwischenordnung einer Kunststoffolie 4 - miteinander verklebt oder verschweißt. Längs der Fenster-

-15-

oberkante sind die aus Kunststoff oder Kunstglas bestehenden Scheiben 2 und 3 mit einer verbreiterten Randzone versehen, die als Hakenleiste 5 abgewinkelt und in ein Gegenprofilteil 6 unter Bildung einer Schwenkkante, eingehakt ist. Das Fenster liegt sowohl im Bereich der oberen miteinander verbundenen Randzone 7, als auch der unteren Randzone 8, sowie schließlich auch der Seitenränder 9 an im Fensterrahmen 1 eingelassenen Dichtlippen 10 an. Die als übliche Kniegelenkhebel ausgebildeten Aussteller 11 sind am einen Ende 12 am Fensterrahmen und am anderen Ende 13 an Klemmstücken 14 angelenkt, welche als im wesentlichen U-förmige Profilstücke ausgebildet, auf die Seitenränder 9 der Scheiben aufgesteckt sind, wobei zusätzliche Verrippungen 15 im Aufsteckbereich einer rutschfreien Halterung dieser Klemmstücke auf den Scheibenrändern 9 dienen. Diese Klemmstücke liegen dabei außerhalb der in Fig.1 strichpunktiert angeordneten Dichtleiste, so daß innerhalb der Dichtleiste keinerlei Durchbrechungen oder sonstige Wärmebrücken vorhanden sind.

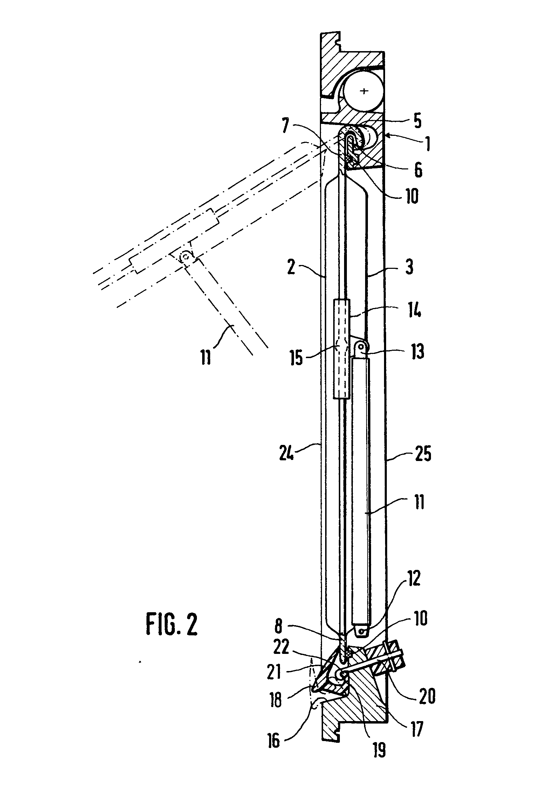

Zur Halterung des Fensters in seiner eingeschwenkten Andruckstellung an den Dichtlippen 10 ist eine in eine Ausnehmung des unteren Schenkels 17 des Fensterrahmens eingelegte, sich über die gesamte Breite des Fensters erstreckende Klemmleiste 18 vorgesehen. Die Klemmleiste 18 ist eine querschnittlich im wesentlichen U-förmige Profilleiste, an deren einen verkürzten Schenkel 19 ein oder mehrere Knebelhaken 20 angreifen, während der verlängerte Klemmschenkel 21 der unteren Scheibenrandzone 8 anliegt und damit das Fenster an den Fensterrahmen anpreßt. Die Klemmleiste soll bevorzugt aus einem federelastischen Kunststoff bestehen, so daß sei bei einseitigen Verspannungen sich entsprechend verformen kann und keine zu starken punktuellen Verspannungen auf die Glasscheiben überträgt. Die Knebelhaken 20 greifen im Bereich einer Abwinklung 22 des Betätigungsschenkels 19 an. Dadurch ist sichergestellt, daß die Klemmleiste in der

-16-

strichpunktiert in Fig.2 dargestellten Freigabestellung des Fensters nicht aus ihrer offenen Ausnehmung 16 herausfallen kann. Die Klemmleiste 18 ist nämlich außer durch die Knebelhaken in keiner Weise in ihrer Ausnehmung 16 des Fensterrahmenschenkels 17 gehaltert, insbesondere nicht etwa auf einer Drehachse gelagert, so daß sie sich frei der Ebene der unteren Scheibenrandzone 8 anpassen kann. Dadurch werden auch bei verbogener Ausbildung und über die Breite verzogenen Scheiben keine starken Verspannungen durch die Klemmleiste 18 auf die Scheiben übertragen. Während in Fig.1 angedeutet ist, daß zwei Knebelhaken 20 vorgesehen sind, ist es auch möglich, nur einen etwa mittig an der Hakenleiste angreifenden Knebelhaken vorzusehen, so daß beim Spannen dieses einen Knebelhakens die Klemmleiste sich mit ihren beiden Enden automatisch entsprech-end der Scheibenebene verkippt und orientiert.

Durch die erfindungsgemäße Bombierung beider Scheiben 2 und 3, wird neben der Vermeidung von thermischen Spannungen in den Randzonen auch erreicht, daß beide Scheiben innerhalb der inneren und äußeren Seitenebenen 24 und 25 des Fensterrahmens zu liegen kommen. Dadurch wird die Gefahr von Beschädigungen und Verschmutzungen der Scheiben während der Fahrt erheblich reduziert.

Der Fensterrahmen 1 besteht - gemäß den Fig. 3 bis 7 - aus den beiden vertikalen Rahmenstielen 31 und 32 sowie aus einer unteren Querprofilleiste 33 und einer oberen Querpro filleiste 34. Diese Teile 31 bis 34 sind durch Eckverbindungsstücke 35 bis 38 miteinander verbunden. Neben den im Extremfall vier unterschiedlichen Eckverbindungsstücken 35 bis 38 braucht man zur Herstellung unterschiedlich großer Fenster lediglich entsprechende Abschnitte von gezogenen,geschäumten oder strangextrudierten Kunststoffprofilleisten, welche die vertikalen Rahmenstiele 31 und 32 bzw. die obere und untere Querprofilleiste 33 und 34 bilden. Die Verbindung der Rahmenstiele und der Querprofilleisten mit den Eckverbindungsstücken kann durch einfache Steckverbindungsglieder und/oder durch Verkleben erfolgen.

Die Querprofilleisten 33 und 34 sind zur Aufnahme der Wohnwagenwand 39 genutet, wobei die Nut 40 der oberen Querprofilleiste doppelt so tief ist wie die Nut 41 der unteren Querprofilleiste. Dadurch kann bei der Montage (vgl.insbes. Fig. 6 und 7) der Fensterrahmen zunächst soweit nach oben geschoben werden, daß die untere Querprofilleiste 33 über der unteren Kante 42 der Fensteröffnung 43 liegt, so daß der Rahmen dann in die vertikale Stellung hineingedrückt werden kann. Anschließend wird der Fensterrahmen um die Tiefe der Nut 41 abgesenkt, wobei nach wie vor die Wohnwagenwand am oberen Rand der Fensteröffnung 43 um die halbe Tiefe der Nut 40 der oberen Querprofilleiste in diese einragt.

In dieser Einbaustellung nach Fig. 7 liegen Schultern 44, die außenseitig einen auf der Innenseite offenen Falz 45 zur Aufnahme der seitlichen Kanten der Wohnwagenwand bilden, an der Außenseite der Wohnwagenwand 39 an. Zur Vervollständigung des Rahmeneinbaus sind dann lediglich noch zwei innere Abdeckleisten 46 für die Fälze der aufrechtstehenden Rahmenstiele 31 und 32 erforderlich.

Bei 47 ist eine an der oberen Querprofilleiste angeformte Hakenleiste zu erkennen, die zum Einhängen der Fensterscheiben dient. Darüber hinaus ist die obere Querprofilleiste 34 auch noch mit einer Rollo-Aufnahme 48 versehen.

Die Erfindung ist nicht auf das dargestellte Ausführungsbeispiel beschränkt. So wäre es beispielsweise auch möglich, entweder die unteren Eckverbindungsstücke 35 und 36 oder aber die oberen Eckverbindungsstücke 37 und 38 einstückig mit den aufrechten Rahmenstielen 31 und 32 zu verbinden.

-18-

Anhand der Fig. 8 bis 13 soll nachstehend eine neuartige Vorrichtung zur Herstellung erfindungsgemäßer Fenster beschrieben werden. Über einer Grundplatte 51 ist eine aus zwei spiegelverkehrten Formhälften 52 und 53 über eine Gelenkachse 54 miteinander verbundene Form mittels Schwenkhebeln 55 sowie durch Lagerung der seitlich überstehenden Schwenkachse 54 in Führungsschienen 56 gehaltert. Die Form hälften 52 und 53 mit den der Scheibenbombierung entsprechenden Einmuldungen 57 und 58 sind mit durch Federn 59 nach außen gedrückten Auswerfern 60 und 61 versehen, welche wiederum Bohrungen 62 aufweisen, die an eine Sauggasquelle anschließbar sind, um den die beiden Scheiben des fertigen Fensters umfassenden einstückigen Scheib-enzuschnitt 63 mittels Saugkraft auf den Auswerfern 60 und 61 festzuhalten. Die Ausbildung ist dabei so getroffen, daß die Scheibe in Abstand von den Rändern 64 und 65 der Formhälften 52 und 53 zu liegen kommt, so daß die Randbereiche, die zur Verformung erweicht werden müssen, freiliegen, so daß die Erwärmung dieser Randabschnitte nicht durch eine starke Wärmeableitung erschwert wird.

Die Auswerfer 60 und 61 sind darüber hinaus mit einer Einzugsvorrichtung 66 in Form einer Verstellmanschette vorgesehen, die ebenfalls an eine Sauggasquelle anschließbar ist - die Anschlußleitungen selbst sind der Einfachheit halber in den Figuren nicht mit dargestellt. Die Bemessung erfolgt dabei in der Weise, daß durch Betätigung dieser Einzugsvorrichtung 66 die Auswerfer 60 und 61 teilweise zurückgezogen werden, und zwar soweit, daß ihre Vordereb-ene etwas unterhalb der Ebene der Ränder 64 und 65 der Formhälften 52 und 53 liegen. Dadurch erfolgt eine geringfügige Bombierung der Scheiben, so daß diese beim Zusammenklappen der Formhälften 52 und 53 nicht plan aufeinanderliegen.Dies erleichtert ihre endgültige Verformung mit Hilfe eingeblase ner Preßluft. Zu diesem Zweck sind die senkrecht zur Gelenk-

-19-

achse liegenden Abschnitte der Ränder 64 und 65 mit Querrinnen 67 versehen, durch welche entsprechend geformte, sich nach innen konisch verjüngende Druckgasrohrstutzen eingeführt werden können. Diese Druckgasrohrstutzen, die zunächst über dem Scheibenzuschnitt 63 liegen, werden beim Zusammenklappen der Formhälften zwischen diesen verklemmt und drücken dabei die flach aufeinander zu liegen kommenden Randzonen unter Bildung eines Verankerungswulstes 68 für Beschlagteile des Fensters nach außen. Die Querrinne 67 ist zusätzlich mit Nuten 69 versehen, die als äußere Rippen der Wulste 68 in Erscheinung treten und damit die Verankerung der genannten Beschlagteile noch weiter verbessern.

Bei der in den Fig. 12 und 13 dargestellten Ausführungsvariante ist das Druckgasrohr 70 zweigeteilt ausgebildet. Die beiden Teile liegen jeweils zu beiden Seiten der eingebrachten Kunststoffolie. Im Falle, daß eine derartige Kunststoffolie zur Bildung eines Zweikammerfensters nicht verwendet wird, kann diese Längsteilung der Druckgasrohre 70 selbstverständlich entfallen.

Die Gelenkachse 54 ist, was in Fig. 10 ebenfalls nur schematisch angedeutet ist, in seitlichen Führungsschienen 56 mittels einer nicht dargestellten Antriebsvorrichtung verschiebbar gelagert. Mit der Gelenkachse 54 zur gemeinsamen Bewegung verbunden ist einerseits eine Folienrolle 71 und auf der anderen Seite eine Klemmlesite 72, welche die über den Scheibenzuschnitt gespannte Folie festhält. Beim Absenken der Gelenkachse 54 in den Führungsschienen 56 werden auch die Folienrolle 71 und die Klemmleiste 72 entsprechend mit abgesenkt, so daß die gespannte Folie zwischen den beiden Scheiben des Fensters eingeklemmt wird. Die Folie wird durch eine nicht dargestellte Sch neidvorrichtung nach diesem Verklemmen abgetrennt, wobei im Hinblick auf die im Verhältnis zur Arbeitserleichterung unverhältnismäßige Ver-

-20-

komplizierung der Vorrichtung durch Verwendung einer automatischen Folienspannvorrichtung, im allgemeinen die Folie
von Hand über die Scheibenzuschnitte gezogen und in der
Klemmleiste verspannt werden soll. An dem zur Gelenkachse
54 parallelen Außenrand der Formhälfte 53 ist eine starre
Patritze 74 befestigt, während am entsprechenden Rand der
Formhälfte 52 eine schwenkbar gelagerte, mit einer Rinne
75 versehene Matritze 76 angelenkt ist. Nach dem Zusammenklappen der Formhälften 52 und 53 wird die Matritze 76 um
90° verschwenkt und biegt dabei die Verlängerungsabschnitte
77 der Scheibenränder zu einer Hakenleiste 78, die der
Schwenklagerung der Scheibe im Fensterrahmen dient. Das Verschwenken der Matritze 76 gegenüber der Patritze 74 kann
- insbesondere wenn auch das Spannen der Folie 73 von Hand
erfolgen soll - von Hand oder gegebenenfalls auch automatisch mit Hilfe einer nicht dargestellten, beispielsweise
pneumatischen Antriebsvorrichtung erfolgen. Die mit Infrarotstrahlern versehene Heizvorrichtung 79 ist verfahrbar
überden Formenangeordnet, so daß eine Heizvorrichtung für
mehrere Formen verwendet werden kann. Die Verfahrbarkeit
ist dabei insbesondere bei der Herstellung von Fenstern mit
einer zwischen den Scheiben verspannten Kunststoffolie erforderlich, da ja die Folienrolle 71 und die Klemmleiste 72
über der aufgeklappten Form angeordnet sind. Nachdem diese
Teile aber seitlich neben den Formen liegen und die Heizvorrichtung 79 ja nur die Scheibenränder in dem Bereich zu
erwärmen braucht, in dem eine Verformung der Scheiben erfolgt, kann die Heizvorrichtung 79 entsprechend schmal gehalten werden, so daß sie zwischen den Führungsschienen 56
durchgefahren werden kann.

Mit besonderem Vorteil sollen die Formhälften 52 und 53 auswechselbar an der Schwenkachse 54 gelagert sein, so daß sie
sich bei Bedarf gegen Formhälften anderer Dimensionierungen
auswechseln lassen, während die übrigen Teile der Fertigungsvorrichtung beibehalten werden. Zu diesem Zweck soll

-21-

die Länge der Schwenkachse entsprechend der größten vorkommenden Fensterbreite bemessen werden, so daß eine Änderung der Führungsschienenabstände - was ja auch eine Verschiebung der Folienrolle mit sich bringen würde - vermieden werden kann.

0029152

-1-

<u>Patentansprüche:</u>

1. Isolierverglastes, ausstellbares Fenster für Wohnwagen
o.dgl. mit einer längs der Oberkante der dichtend miteinander verbundenen Scheiben verlaufenden, als Schwenklager in ein Gegenprofil des aus Isolierstoff bestehenden
Fensterrahmens eingehängten Hakenleiste und einer im Bereich der Unterkante angreifenden, die Scheiben an den
Rahmen anpressenden Verschlußeinrichtung, <u>dadurch gekenn-
zeichnet</u>,daß die Hakenleiste (5) durch eine einstückige
Abwinklung wenigstens einer aus Kunststoff oder Kunstglas bestehenden Scheibe (2, 3) gebildet ist.

2. Fenster nach Anspruch 1, <u>dadurch gekennzeichnet</u>, daß es
zwei bombierte Scheiben (2, 3) umfaßt, deren unmittelbar
miteinander verbundene obere Randzonen (7) gemeinsam unter Bildung der Hakenleiste (5) abgewinkelt sind.

3. Fenster nach Anspruch 1 oder 2, <u>dadurch gekennzeichnet</u>,
daß die vorzugsweise als Kniegelenkhebel ausgebildeten
Aussteller (11) an auf die Seitenränder (9) der Scheiben (1, 2) aufgesteckten, außerhalb der umlaufenden
Dichtlippe (10) des Fensterrahmens (1) liegenden,Klemmstücken (14) angelenkt sind.

4. Fenster nach Anspruch 3, <u>dadurch gekennzeichnet</u>,daß die
Klemmstücke (14) auf Verrippungen (15) der Scheibenränder (9) aufsteckbare U-Profilteile sind.

5. Fenster nach einem der Ansprüche 1 bis 4, <u>gekennzeichnet
durch</u> ein sich über den größten Teil der, insbesondere
die gesamte Breite des Fensters erstreckende,die untere
Scheibenrandzone (8) federnd an den Rahmen (1) anpressende Klemmleiste (18).

6. Fenster nach Anspruch 5, dadurch gekennzeichnet, daß die Klemmleiste (18) eine querschnittlich im wesentlichen U-förmige, frei in einer Ausnehmung des Fensterrahmens liegende Profilleiste aus Kunststoff o.dgl. ist, deren einer, vorzugsweise verlängerter, Klemmschenkel (21) der unteren Scheibenrandzone (8) anliegt und an deren zweitem Betätigungsschenkel (19) ein ihre Verschwenkung bewirkender Knebelhaken (20) angreift.

7. Fenster nach Anspruch 6, dadurch gekennzeichnet, daß nur ein etwa mittig an der Klemmleiste (18) angreifender Knebelhaken (20) vorgesehen ist.

8. Fenster nach Anspruch 6 oder 7, dadurch gekennzeichnet, daß der Knebelhaken (20) an einer von der Anlagefläche des Fensterrahmens (1) weg zum Klemmschenkel (21) gerichteten Abwinklung (22) des Betätigungsschenkels (19) angreift.

9. Fenster nach einem der Ansprüche 1 bis 8, dadurch gekennzeichnet, daß den miteinander verbundenen, insbesondere verklebten oder verschweißten Scheiben (2, 3) eine ebene Klarsichtfolie (4) zwischengeordnet ist.

10. Fenster nach einem der Ansprüche 1 bis 9, dadurch gekennzeichnet, daß die Ebenen der Scheiben (2, 3), insbesondere der Außenscheibe (2), gegenüber den entsprechenden Seitenflächen (24, 25) des Fensterrahmens (1) zurückgesetzt sind.

11. Kunststoff-Fensterrahmen, insbesondere für Wohnwagen o.dgl., insbesondere für Fenster nach einem der Ansprüche 1-10, dadurch gekennzeichnet, daß er aus Kunststoffprofilleisten (31, 32, 33, 34) und sie verbindenden vorgeformten Eckverbindungsstücken (35, 36, 37, 38) zusammengesetzt ist.

12. Kunststoff-Fensterrahmen nach Anspruch 11, dadurch gekennzeichnet, daß die beiden aufrechtstehenden Rahmenstiele (31, 32) mit den unteren oder oberen Eckverbindungsstücken (35, 36 bzw. 37, 38) jeweils eine Einheit bilden.

13. Kunststoff-Fensterrahmen nach Anspruch 11 oder 12, dadurch gekennzeichnet, daß die obere und untere Querprofilleiste ( 33,34) zur Aufnahme der Wohnwa-enwand (39) genutet sind, wobei die Nut (40) der oberen Querprofilleiste (34) doppelt so tief ist wie die Nut (41) der unteren Querprofilleiste (33).

14. Kunststoff-Fensterrahmen nach einem der Ansprüche 11 bis 13, dadurch gekennzeichnet,daß die beiden aufrechtstehenden Rahmenstiele (32, 32) mit einem einseitig offenen Falz (45) zur Aufnahme der Wohnwagenwand (39) versehen sind.

15. Kunststoff-Fensterrahmen nach einem der Ansprüche 11 bis 14, gekennzeichnet durch zwei innere Abdeckleisten (46) für die Fälze (45) der aufrechtstehenden Rahmenstiele (31, 32).

16. Kunststoff-Fensterrahmen nach einem der Ansprüche 11 bis 15, dadurch gekennzeichnet,daß die obere Querprofilleiste (34) eine angeformte Hakenleiste (47) zum Einhängen der Fensterscheiben aufweist.

17. Kunststoff-Fensterrahmen nach einem der Ansprüche 11 bis 16, dadurch gekennzeichnet,daß die obere Querprofilleiste (34) mit einer Rollo-Aufnahme (48) versehen ist.

- 4 -

18. Verfahren zur Herstellung eines aus zwei bombierten verformten Kunststoffscheiben gebildeten Fensters für Wohnwagen o.dgl., insbesondere nach einem der Ansprüche 1
bis 10, dadurch gekennzeichnet, daß ein beide Scheiben
umfassender einstückiger ebener Zuschnitt, vorzugsweise
mittels Wärmestrahlung im Bereich der Scheibenränder erwärmt und im Wege des Tiefziehens oder Formpressens verformt wird, daß die beiden Hälften um die Mittelachse
übereinandergeklappt und daß die Randbereiche miteinander verklebt oder verschweißt werden.

19. Verfahren nach Anspruch 18, dadurch gekennzeichnet, daß
vorzugsweise längs der zur Mittelachse parallelen Außenkanten angeordnete Verlängerungsabschnitte der Scheibenränder nach deren Verbindung hakenförmig umgebogen werden.

20. Verfahren nach Anspruch 18 oder 19, dadurch gekennzeichnet, daß mit dem Zusammenklappen des Scheibenzuschnittes
eine Klarsichtfolie zwischen den Hälften verklemmt wird.

21. Vorrichtung zur Durchführung des Verfahrens nach einem
der Ansprüche 18 bis 20, gekennzeichnet durch zwei spiegelverkehrt über ein Gelenk (54) miteinander verbundene
Formhälften (73), deren Randflächen (64, 65) spaltfrei
aufeinanderpassen, mit Anschlüssen für eine Saugquelle
und/oder eine Druckgasquelle zur Erzeugung eines Unterdrucks unter bzw. eines Überdrucks über dem auf den Formhälften aufliegenden Scheibenzuschnitt (63), eine relativ
zur Form verfahrbare Heizvorrichtung (79), sowie taktgesteuerte Antriebsvorrichtung zur Bewegung der Form relativ zur Heizvorrichtung, zur Bewegung der Formhälften und
zur Betätigung der Saug- und /oder Druckgasquelle.

22. Vorrichtung nach Anspruch 21, dadurch gekennzeichnet, daß in den Formausnehmungen (57, 58) unter Federwirkung über die Formränder (64, 65) überstehende Auswerferplatten (60, 61) verschiebbar gelagert sind, die mit Bohrungen (62) versehen sind, die zum Zwecke der Scheibenhalterung mit der Saugquelle verbindbar sind.

23. Vorrichtung nach Anspruch 21 oder 22, dadurch gekennzeichnet, daß in wenigstens einer der Formhälften (52, 53), vorzugsweise in deren zur Gelenkachse (54) senkrechten Rändern, Querrinnen (67) eingeformt sind, die zur Aufnahme von zwischen die zusammengeklappten Scheiben einragenden, sie mittels Druckgas in die Formausnehmungen (57, 58) drückenden, nach vorne hin sich konisch verjüngenden Druckgasrohrstutzen (70) dienen.

24. Vorrichtung nach Anspruch 23, dadurch gekennzeichnet, daß dieQuerrinne (67) mit zur Ausbildung von äußeren Rippen, Noppen o.dgl. dienenden Vertiefungen (69) versehen sind.

25. Vorrichtung nach einem der Ansprüche 22 bis 24, dadurch gekennzeichnet, daß die Auswerferplatten (60, 61) mit einer vorzugsweise als über die Saugquelle betätigbare Verstellmanschette ausgebildeten, Einzugsvorrichtung (66) versehen sind, um sie - mit den angesaugten Mittelabschnitten der Scheiben - vor dem Zusammenklappen der Formhälften (52, 53) etwas unter die Randebene (64, 65) de der Formhälften (52, 53) zurückzuziehen.

26. Vorrichtung nach einem der Ansprüche 21 bis 25, dadurch gekennzeichnet, daß die Formhälften (52, 53) vor einer Grundplatte (51) in Abstand von der Schwenkachse (54) angreifende Schwenkhebel (55) sowie die in Führungsschienen (56) senkrecht zur Grundplatte (51) feststellbar verschiebbare, Gelenkachse (54) gehaltert sind.

- 6 -

27. Vorrichtung nach einem der Ansprüche 21 - 26, dadurch gekennzeichnet,daß die eine Formhälfte (53), vorzugsweise an dem zur Gelenkachse parallelen Rand mit einer starren Patritze (74) und die andere Formhälfte (52) mit einer verschwenkbaren, eine Rinne (75) aufweisenden die Verlängerungsabschnitte (77) der Scheibenränder hakenförmig um die Patritze (74) abwinkelnden Matritze (76) versehen sind.

28. Vorrichtung nach einem der Ansprüche 21 - 27, dadurch gekennzeichnet, daß seitlich in Verlängerung der Gelenkachse (54) der Formhälften (52, 53) eine senkrecht zur Grundebene (51) angeordnete Folienrolle (71) und dieser gegenüberstehend eine Klemmleiste (72) zum Festhalten des freien Endes der über den Scheibenzuschnitt (63) gespannten Folie (73) angeordnet sind,die beide mit der Gelenkachse (54) zur gemeinsamen Bewegung verbunden sind.

29. Vorrichtung nach einem der Ansprüche 21 bis 28, dadurch gekennzeichnet,daß die Formhälften (52, 53) auswechselbar an der Schwenkachse (54) gelagert sind, deren Länge entsprechend der größten vorkommenden Fensterbreite bemessen ist.

FIG. 1

FIG. 3

0029152

**FIG. 2**

FIG. 4

FIG. 5

FIG. 7

FIG. 6

FIG. 8

FIG. 9

C029152

FIG. 10

FIG. 11

68 ⌐ 68

**FIG. 12**

70

70

69

67

**FIG. 13**

| | | |
|---|---|---|
| Europäisches Patentamt | **EUROPÄISCHER RECHERCHENBERICHT** | Nummer der Anmeldung<br>EP 80 10 6735 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | FR - A - 2 185 071 (ETILAM-GRAVIGNY)<br>* Seite 2, Zeilen 23-40; Seite 3, Zeilen 1-8; Figur 1 *<br>-- | 1,2 | E 06 B 3/38<br>3/66<br>B 60 J 1/00<br>B 29 C 17/03<br>17/07 |
| | DE - A - 2 802 179 (ESSMANN)<br>* Seite 6, Absatz 2; Figuren 1-5 *<br>-- | 1,2 | |
| | CH - A - 383 614 (HAGEN)<br>* Seite 2, Zeilen 82-102, 118-120; Seite 3, Zeilen 1-8, 31-74; 85-116; Figuren 1-3,5,6 *<br>-- | 9,20,23 | **RECHERCHIERTE SACHGEBIETE (Int. Cl.³)** |
| | US - A - 2 896 272 (LATENSER)<br>* Spalte 2, Zeilen 46-66; Spalte 3, Zeilen 1-75; Spalte 4, Zeilen 1-28; Figuren 1-5 *<br>-- | 9,23 | E 06 B<br>E 05 D<br>B 60 J<br>B 60 P<br>B 61 D<br>B 29 C |
| | DE - A - 1 534 816 (WOLFARTH)<br>* Seite 4, Absatz 2; Figur 2 *<br>-- | 10 | |
| | US - A - 3 728 833 (GROSSMANN)<br>* Spalte 2, Zeilen 52-56; Spalte 3, Zeilen 6-10; Spalte 4, Zeilen 20-30; Figuren 1-12 *<br>-- | 11,14 | **KATEGORIE DER GENANNTEN DOKUMENTE**<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| | FR - A - 2 203 006 (KLEIN)<br>* Seite 2, Zeilen 12-33; Figur 2 *<br>-- ./. | 16 | |

Der vorliegende Recherchenbericht wurde für alle Patentansprüche erstellt.

| Recherchenort | Abschlußdatum der Recherche | Prüfer |
|---|---|---|
| Den Haag | 11-02-1981 | DEPOORTER |

EPA form 1503.1 06 76

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | US - A - 3 597 799 (EARLE)<br><br>* Spalte 4, Zeilen 46-75; Spalte 5, Zeilen 1-75; Spalte 6, Zeilen 1-53; Figuren 1-11 *<br><br>-- | 18,21, 26 | |
| | BE - A - 751 431 (APPLICATIONS DE L'ELECTRICITE)<br><br>* Seite 4, Absatz 1; Figuren 1-3 *<br><br>-- | 18,21, 23 | |
| A | FR - A - 1 158 092 (HENON)<br><br>* Seite 1, Spalte 1, Absätze 2, 8,9; Spalte 2, Absätze 1-4; Figuren 1-3 *<br><br>-- | 1 | RECHERCHIERTE SACHGEBIETE (Int. Cl.³) |
| A | US - A - 4 047 331 (DAYLANTES)<br><br>* Spalte 5, Zeilen 3-11; Spalte 6, Zeilen 24-30; Figuren 7-11 *<br><br>-- | 1 | |
| A | US - A - 4 095 640 (BECKERER)<br><br>* Spalte 2, Zeilen 66-68; Spalte 3, Zeilen 1-17; Spalte 5, Zeilen 37-50; Spalte 6, Zeilen 24-38; Figuren 1-4,10 *<br><br>-- | 1,14, 15 | |
| A | DE - A - 2 510 638 (KLEIN)<br><br>* Seite 3, Absatz 7; Seite 4, Absätze 2-6; Seite 5, Absätze 1,5; Seite 6, Absätze 3-6; Seite 7, Absatz 1; Figuren 1-5 *<br><br>---- | 1,2, 18,23 | |

EPA Form 1503.2   06.78